# EUROPEAN PATENT APPLICATION

(11) **EP 4 573 877 A1**
(43) Date of publication of application: **25.06.2025**
(21) Application number: 23870908.3
(22) Date of filing: 27.09.2023
(51) Int. Cl.: A01D 43/063

(54) **MOWER AND MOWER START AND STOP CONTROL METHOD**

(30) Priority: 27.09.2022 CN 202211185901; 25.06.2023 CN 202321627977 U
(71) Applicant: Zhejiang Yat Electrical Appliance Co., Ltd., Jiaxing, Zhejiang 314051 (CN)
(72) Inventor: CHEN, Gang, Jiaxing, Zhejiang 314051 (CN)
(74) Representative: karo IP
(86) International application number: PCT/CN2023/121946
(87) International publication number: WO 2024/067681

(57) **Abstract**

Disclosed is a lawnmower, including a housing, a rear cover, and a grass catcher arranged at one end of the housing, the rear cover being rotatably arranged on the housing, and a latching mechanism operable to dispose the rear cover in a latched state being further arranged between the housing and the rear cover; when the rear cover is in the latched state, the lawnmower is disposed in a stop state, and when the rear cover is in an unlatched state, the lawnmower is disposed safely startable. Further disclosed is a lawnmower start/stop control method, which determines states of the rear cover and the grass catcher according to preset conditions to thereby decide on whether to start the lawnmower. The disclosure offers the following benefits: the latching mechanism arranged between the housing and the rear cover disposes the opened rear cover in a latched state, when the lawnmower cannot be started and is disposed in the stop state, which protects the user; the lawnmower can only be started safely when the rear cover is closed and disposed in the unlatched state, which eliminates safety hazards to the user in case of starting the lawnmower with the rear cover open.

## Description

### FIELD

The present disclosure relates to lawnmower technologies, and more specifically to a lawnmower and a lawnmower start/stop control method.

### BACKGROUND

To dump grass clippings off an operating lawnmower, a conventional practice is to first cut off the power manually to stop the lawnmower, and then flip the rear cover thereof open to remove the grass catcher; after the clippings are completely dumped, it is needed to open the rear cover again to mount the grass catcher back, and then switch on the power again to continue the mowing work. If the lawnmower is started while the rear cover is left open, a significant threat would be posed to safety of a lawnmower operator. Therefore, conventional lawnmowers have potential hazards.

### SUMMARY

A lawnmower and a lawnmower start/stop control method are described herein, which can effectively prevent safety hazards posed by conventional lawnmowers that are started with a rear cover thereof being left open.

The disclosure adopts a technical solution set out below:

A lawnmower, comprising: a housing, a rear cover, and a grass catcher arranged at one end of the housing, wherein the rear cover is rotatably arranged on the housing, and a latching mechanism operable to dispose the rear cover in a latched state is further arranged between the housing and the rear cover; and wherein when the rear cover is in the latched state, the lawnmower is disposed in a stop state, and when the rear cover is in an unlatched state, the lawnmower is disposed safely startable.

In some implementations, when a flip angle of the rear cover is disposed in a range from 175° to 220°, the latching mechanism is triggered to dispose the rear cover in the latched state.

In some implementations, the latching mechanism comprises a power-off device; when the rear cover is in the latched state, the power-off device is activated or deactivated to dispose the lawnmower in the stop state; and when the rear cover is in the unlatched state, the power-off device is deactivated or activated to dispose the lawnmower safely startable.

In some implementations, the power-off device comprises at least one of:
a structure comprising a Hall plate arranged on the housing, a first magnet arranged on the rear cover, and a controller electrically connected to the Hall plate and operable to control a power state of a power supply; wherein when the rear cover is in the latched state, the first magnet moves closer to the Hall plate so that the controller cuts off power supply, and when the rear cover is in the unlatched state, the first magnet moves away from the Hall plate so that the controller recovers power supply;
or, a switch arranged on the rear cover and electrically connected to a power supply, the switch being operable to cut off power supply when the rear cover is in the latched state and recover power supply when the rear cover is in the unlatched state;
or, a structure comprising a signal transmitter arranged on the rear cover, a controller operable to control a power state of a power supply, and a signal receiver installed on the controller, wherein when the rear cover is in the latched state, the controller receives a power-off signal to cut off power supply, and when the rear cover is in the unlatched state, the controller receives a power-on signal to recover power supply;
or, a structure comprising a reed switch arranged on the housing, a second magnet arranged on the rear cover, and a controller electrically connected to the reed switch and operable to control a power state of a power supply, wherein when the rear cover is in the latched state, the second magnet moves closer to the reed switch so that the controller cuts off power supply, and wherein when the rear cover is disposed in the unlatched state, the second magnet moves away from the reed switch so that the controller recovers power supply.

In some implementations, the latching mechanism comprises an iron sheet arranged on the housing, and a second magnet arranged on the rear cover, the iron sheet and the second magnet being fitted to secure the rear cover.

In some implementations, the latching mechanism comprises a deadbolt fixedly arranged on the rear cover, and a latch movably arranged in the housing and snap-fitted with the deadbolt; and the latch comprises a casing, a slider movably arranged in the casing, a snap and a rotary support which are rotatably arranged on the slider, a first compression spring connected between the casing and the slider, and a first rail and a second rail which are fixedly arranged in the casing and fitted with the rotary support under an action of the first compression spring to play a role of guiding.

In some implementations, the snap comprises a first snap piece and a second snap piece which are symmetrically arranged, a snap-fit position for securing the deadbolt being formed between the first snap piece and the second snap piece, the first snap piece and the second snap piece being rotatable relatively to move away from or closer to each other so as to open or lock the snap-fit position.

In some implementations, the latching mechanism comprises a knob cover fixedly arranged on a shield body, and a rotary rod, a knob, and a second compression spring which are sequentially arranged in the knob cover, the second compression spring being limited between the knob and the shield body, one end of the rotary rod being movably inserted in the knob cover, an opposite end of the rotary rod being fixedly attached to a rear cover rotary shaft.

In some implementations, a knob step is arranged in a peripheral direction of the knob, an abutment post is arranged in a central portion of the knob, a ramped rail is arranged between the abutment post and the knob step, a pressure relief hole is provided in the ramped rail, a first step and a second step, which are fitted with the knob step, are arranged on the knob cover, and a support post fitted with the ramped rail and the pressure relief hole is arranged on the rotary rod.

In some implementations, a first elastic member is arranged between the rear cover and the housing, the first elastic member acting on the rear cover so that the rear cover is given a tendency of moving toward the grass catcher.

In some implementations, the latching mechanism comprises a second elastic member arranged between the housing and the rear cover, the rear cover, when being flipped by an angle ranging from 175° to 220° relative to a vertical surface, being capable of maintaining stationary relative to the housing. This setup overcomes the issue of conventional lawnmowers which have a cumbersome operation when opening the rear cover to dump the grass clippings. The elastic member arranged between the housing and the rear cover offers a good reliability and a robust repeatability and thusly can provide sufficient restoring force. In addition, during a process of the rear cover being flipped from the closed position to the open position, the elastic member is stretched to accumulate energy, which may contribute the rear cover a tendency of moving toward the closed position to facilitate the rear cover to play its role of closing. Since the open position is set at a dead center position of the rear cover rotating relative to the housing, the rear cover can maintain stationary relative to the housing when the rear cover is flipped open upward to an angle ranging from 175° to 220° relative to the horizontal direction, which eliminates a need for the user to always hold the opened rear cover and also maintains the rear cover open while the grass clippings are being dumped. The rear cover would be re-closed after the grass clippings are completely dumped. This manner effectively facilitates user operation in dumping the grass clippings with less operating steps.

In some implementations, a position disposing the rear cover stationary relative to the housing is where the rear cover is flipped to or past a dead center position of the second elastic member, the dead center position being a position where a pull force direction imposed by the second elastic member on the rear cover passes through a rotational axis of the rear cover. With this setup, the momentum arm of the elastic force generated by the elastic member is 0 relative to the rotational axis of the rear cover, so that the rear cover maintains balanced at the dead center position.

In some implementations, a connecting portion is provided on the rear cover, an engagement hole for hitching the second elastic member being provided on the connecting portion. Provision of the connecting portion facilitates connecting the elastic member; in addition, the engagement hole provided on the connecting portion for hitching the elastic member facilitates secure attachment of the elastic member.

In some implementations, the engagement hole is a waist-shaped hole, and after the rear cover is flipped past the dead center position, the second elastic member moves from one end of the engagement hole to an opposite end thereof. The waist-type engagement hole can effectively ease mounting of the elastic member; in addition, after the rear cover is flipped past the dead center position, a noticeable vibration is generated while the elastic member is moving from one end of the engagement hole to the opposite end, alerting the user that the rear cover has been flipped past the dead center position.

In some implementations, the rear cover is rotatably connected to the housing via a first rotary shaft. By leveraging the first rotary shaft to realize rotational connection between the rear cover and the housing, a high reliability is achieved, and the rear cover is not easily stuck during the rotating process.

In some implementations, two stationary bases are arranged on the housing at an interval, an end portion of the rear cover being disposed between the two stationary bases, the first rotary shaft rotatably connected to the rear cover being provided on each of the stationary bases, axes of the first rotary shafts coinciding. Since the rear cover has a larger width, two first rotary shafts are arranged at two sides of the rear cover to fit with the rear cover, respectively, which reduces the length of the first rotary shafts, so that the first rotary shafts do not affect normal rotating and opening of the rear cover; by arranging the two stationary bases on the housing to fit with the first rotary shafts, respectively, the connecting strength between the first rotary shafts and the housing is ensured.

In some implementations, each of the two stationary bases comprises a base body and a fixed chuck removably connected on the base body, one end of the first rotary shaft being securely attached on the fixed chuck, a through hole for an opposite end of the first rotary shaft to pass through being provided on the base body, the opposite end of the first rotary shaft being rotatably connected to the rear cover. The fixed chuck facilitates secureness, mounting, and demounting of the first rotary shaft.

In some implementations, an engagement slot for securing the second elastic member is provided on the housing. The engagement slot arranged on the housing facilitates secure connection between the elastic member and the housing.

In some implementations, the lawnmower further comprises a first drive portion arranged on the rear cover and a second drive portion arranged on the grass catcher; and when the grass catcher is pushed in the housing, the second drive portion and the first drive portion engage to drive the rear cover to switch to the unlatched state. Engagement between the second drive portion and the first drive portion when the grass catcher is pushed in the housing drives the rear cover to switch to the unlatched state, which eliminates a need of manually closing the rear cover after the grass catcher is pushed in, thereby cutting down the operation steps.

In some implementations, the rear cover is rotatably connected to the housing via the first rotary shaft, a rotary shaft base connected to the first rotary shaft being provided on the rear cover, the first drive portion being secured on the rotary shaft base. The first rotary shaft offers a simple and highly reliable connection structure; by arranging the first drive portion on the rotary shaft base, other parts on the rear cover are less affected by the first drive portion; in addition, during a process of pushing the grass catcher in the housing, the second drive portion easily engages the first drive portion.

In some implementations, a pair of the rotary shaft bases are provided on the rear cover, the first drive portion being provided on each of the rotary shaft bases. Provision of the pair of rotary shaft bases facilitates connection to the first rotary shaft, and provision of the first drive portion on each rotary shaft base reduces the abutment force between the first drive portion and the second drive portion, thereby reducing wear between the first drive portion and the second drive portion.

In another aspect of the disclosure, there is provided a lawnmower start/stop control method, which is applied to the lawnmower noted *supra,* comprising:
S1. determining whether a rear cover is in a normal state according to a first preset condition;
S2. determining, based on the first preset condition, whether the lawnmower is startable according to a second preset condition;
S3. determining, based on the first preset condition and the second preset condition, whether the grass catcher has been disturbed after start of the lawnmower, and controlling start/stop of the lawnmower according to a third preset condition;

wherein the first preset condition includes whether a flip angle of the rear cover satisfies 0° to 175°;
the second preset condition includes whether a power switch is triggered;
and the third preset condition includes whether the flip angle of the rear cover satisfies 175° to 220° in a case that the grass catcher has been disturbed after start of the lawnmower.

Compared with conventional technologies, the disclosure offers the following benefits:

The latching mechanism arranged between the housing and the rear cover disposes the opened rear cover in a latched state, when the lawnmower cannot be started and is disposed in the stop state, which protects the user; the lawnmower can only be started normally when the rear cover is closed and unlatched, which eliminates safety hazards to the user in case of starting the lawnmower while the rear cover is open.

To dump the grass clippings, the rear cover is opened and flipped by a certain angle so as to be secured by the latching mechanism; then, the grass catcher is removed to empty the clippings; after the clippings are emptied, it is no longer necessary to re-open the rear cover for mounting the grass catcher back. Since the rear cover is unlatched and automatically reset under the action of the first elastic member while the grass catcher is being pushed back, the whole process eliminates a need of frequently opening the rear cover to remove and mount the grass catcher, which facilitates the user's operation to remove and mount the grass catcher and offers a good user experience; in addition, due to provision of the power-off device, when the rear cover is flipped by a certain angle, power supply is automatically disconnected and connected, which realizes automatic control of lawnmower operation, thereby enhancing use safety.

### BRIEF DESCRIPTION OF THE DRAWINGS

Fig. 1 is a structural schematic diagram of a first implementation of the disclosure;
Fig. 2 is a structural schematic diagram of a power-off device according to the first implementation of the disclosure;
Fig. 3 is a side view of the first implementation of the disclosure;
Fig. 4 is a local enlarged view of part A in Fig. 3;
Fig. 5 is an exploded schematic view of a second implementation of the disclosure;
Fig. 6 is a structural schematic view of the second implementation of the disclosure;
Fig. 7 is a structural schematic diagram of a latch in the second implementation of the disclosure;
Fig. 8 is a structural schematic diagram of a rotary support in the second implementation of the disclosure;
Fig. 9 is a sectional view of a slider in the second implementation of the disclosure;
Fig. 10 is an exploded view of a third implementation of the disclosure;
Fig. 11 is a structural schematic diagram of a knob cover in the third implementation of the disclosure;
Fig. 12 is a structural schematic diagram of a knob in the third implementation of the disclosure;
Fig. 13 is a structural schematic diagram of a rotary rod in the third implementation of the disclosure;
Fig. 14 is a schematic diagram of a latching mechanism in states *b, c,* and *d* in the third implementation of the disclosure;
Fig. 15 is a structural schematic diagram when a grass catcher is not mounted in a fourth implementation of the disclosure;
Fig. 16 is a structural schematic diagram when the rear cover is open in the fourth implementation of the disclosure;
Fig. 17 is a structural schematic diagram when the rear cover is opened and flipped to a dead center position in the fourth implementation of the disclosure;
Fig. 18 is a structural schematic diagram when the rear cover is opened and flipped past the dead center position in the fourth implementation of the disclosure;
Fig. 19 is an exploded view of a housing in the fourth implementation of the disclosure;
Fig. 20 is a bottom view of the fourth implementation of the disclosure;
Fig. 21 is a local enlarged view of part A in Fig. 20;
Fig. 22 is a structural schematic view of a rear cover in the fourth implementation of the disclosure;
Fig. 23 is a structural schematic diagram of a rear cover in a fifth implementation of the disclosure;
Fig. 24 is a structural schematic diagram of an upper cover of a grass catcher in the fifth implementation of the disclosure;
Fig. 25 is a structural schematic diagram when the grass catcher is ready to be pushed in the housing in the fifth implementation of the disclosure;
Fig. 26 is a structural schematic diagram when the grass catcher is pushed in the housing in the fifth implementation of the disclosure;
Fig. 27 is a control flow diagram when the machine is in a clippings-shredding mode in a sixth implementation of the disclosure;
Fig. 28 is a schematic diagram of the rear cover being in the unlatched state when the machine is in the clippings-shredding mode in the sixth implementation of the disclosure;
Fig. 29 is a schematic diagram of the rear cover being in the latched state when the machine is in the clippings-shredding mode in the sixth implementation of the disclosure;
Fig. 30 is a control flow diagram when the machine is in a clippings-collecting mode in the sixth implementation of the disclosure.

### Reference Numerals:

1. housing; 11. engagement recess; 2. grass catcher; 21. grass catcher upper cover; 3. rear cover; 31. rear cover rotary shaft; 32. engagement hole; 33. connecting portion; 4. first elastic member; 5. latching mechanism; 51. second iron sheet; 52. second magnet; 53. deadbolt; 54. latch; 541. casing; 542. slider; 5421. slot; 5422. fixed shaft; 5423. arc-shaped recess; 543. snap; 5431. first snap piece; 5432. second snap piece; 544. rotary support; 5441. D-shaped pin; 5442. cylindrical pin; 545. first compression spring; 546. first rail; 547. second rail; 55. knob cover; 551. first step; 522. second step; 56. rotary rod; 561. support post; 57. knob; 571. knob step; 572. abutment post;573. ramped rail; 5731. pressure relief hole; 58. second compression spring; 6. power-off device; 61. Hall plate; 62. first magnet; 7. shield; 8. wheel axle; 9. controller; 10. second elastic member; 20. first rotary shaft; 40. stationary base; 41. base body; 42. fixed chuck; 43. snap-in recess.

### DETAILED DESCRIPTION OF EMBODIMENTS

Hereinafter, implementations of the disclosure will be described in detail. The example implementations are illustrated in the accompanying drawings. The implementations described below with reference to the accompanying drawings are exemplary, intended only for explaining the disclosure, without amounting to limit the disclosure.

In the description of the disclosure, it needs to be understood that the orientational or positional relationships indicated by the terms "center," "longitudinal," "transverse," "length," "width," "thickness", "upper," "lower," "front," "rear," "left," "right," "vertical," "horizontal," "top," "bottom," "inner," "outer," and the like are orientational and positional relationships based on the drawings, which are intended only for facilitating description of the disclosure and simplifying relevant illustrations, not for indicating or implying that the devices or elements compulsorily possess those specific orientations and are compulsorily configured and operated with those specific orientations; therefore, such terms should not be construed as limitations to the disclosure.

Besides, the terms "first" and "second" are only used for descriptive purposes, which shall not be construed as indicating or implying relative importance or implicitly indicating the amount of a referred to technical feature. Therefore, the features limited by "first" and "second" may explicitly or implicitly include one or more of such features. In the description of the disclosure, unless otherwise indicated, "plurality" indicates two or above.

In the disclosure, unless otherwise explicitly provided and limited, the terms such as "mount," "connect," "couple," and "fix" should be understood broadly, which, for example, may refer to a fixed connection, a detachable connection, or an integral connection; which may be a mechanical connection or an electrical connection; which may be a direct connection or an indirect connection via an intermediate medium; which may also be a communication between the insides of two elements. To a person of normal skill in the art, specific meanings of the above terms in the disclosure may be construed based on specific situations.

### First Implementation

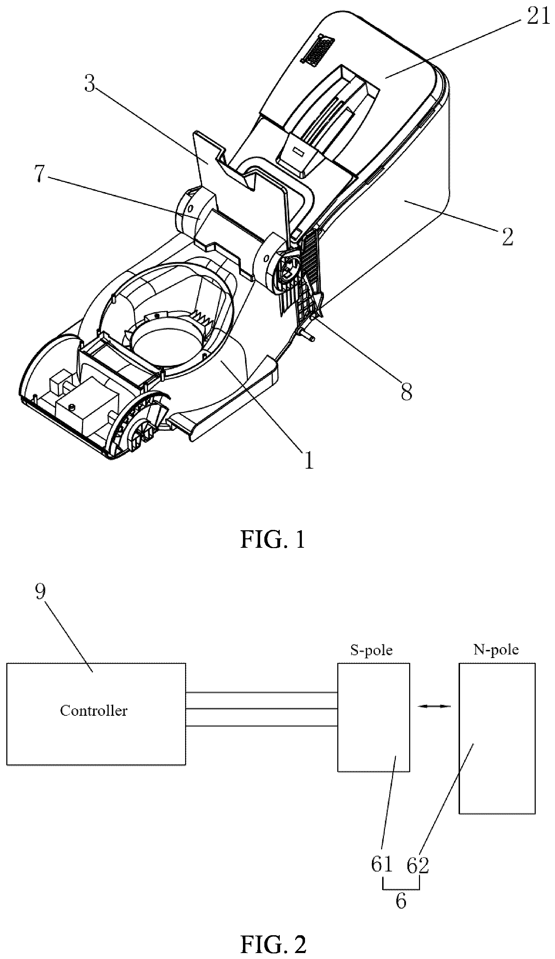

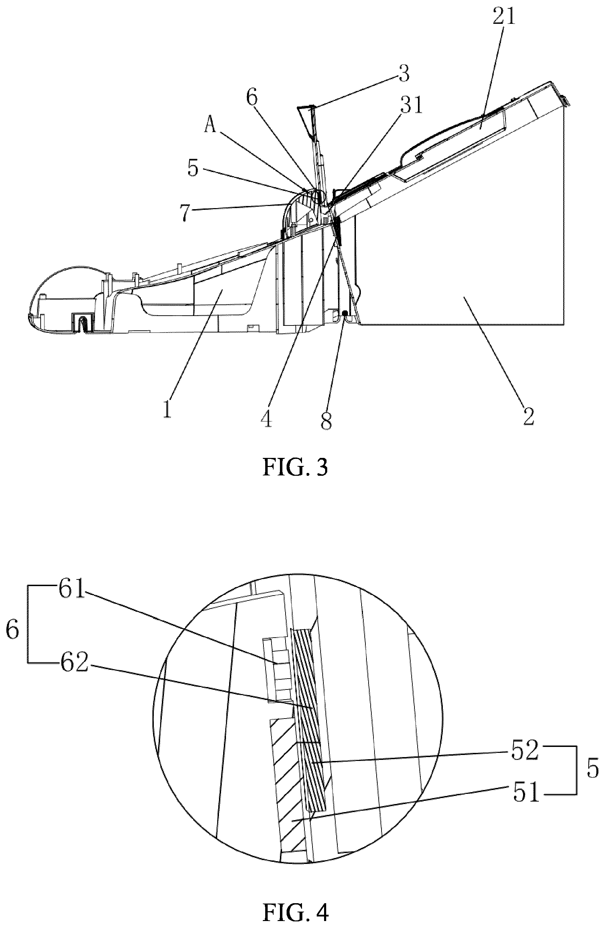

As illustrated in Figs. 1 to 4, a lawnmower comprises a housing 1, a rear cover 3, and a grass catcher 2 provided at one end of the housing 1, the rear cover 3 being rotatably arranged on the housing 1, the housing 1 comprising a housing body and a shield 7 arranged on the housing body nearby the rear cover 3, the shield 7 being operable to cover a gap formed by rotatable connection of the rear cover relative to the housing body, a latching mechanism 5 operable to dispose the rear cover 3 in a latched state being further arranged between the housing 1 and the rear cover 3, where the lawnmower stops when the rear cover 3 is in the latched state and can be started normally when the rear cover 3 is in an unlatched state.

The lawnmower has a clippings-shredding mode; when a flip angle of the rear cover 3 is in a range from 0° to 175°, the rear cover 3 is disposed in the unlatched state; and when the flip angle of the rear cover 3 is in a range from 175° to 220°, the latching mechanism 5 is triggered to dispose the rear cover 3 in the latched state.

The lawnmower has a clippings-collecting mode; when a flip angle of the rear cover 3 is in a range from 90° to 175°, the rear cover 3 is disposed in the unlatched state; and when the flip angle of the rear cover 3 is disposed in a range from 175°~220°, the latching mechanism 5 is triggered to dispose the rear cover 3 in the latched state.

The latching mechanism 5 comprises a power-off device 6; when the rear cover 3 is in the latched state, by triggering or switching off the power-off device 6, the lawnmower is disposed in a stop state; when the rear cover 3 is in the unlatched state, by switching off or triggering the power-off device 6, the lawnmower can start normally.

The power-off device 6 comprises at least one of:
a Hall plate 61 arranged on the shield 7, a first magnet 62 arranged on the rear cover 3, and a controller 9 electrically connected to the Hall plate 61 and operable to control a power state of a power supply, where when the rear cover 3 is in the latched state, the first magnet 62 moves closer to the Hall plate 61 so that the controller 9 cuts off power supply; and when the rear cover 3 is in the unlatched state, the first magnet 62 moves away from the Hall plate 61 so that the controller 9 recovers power supply;
or, a switch electrically connected to the power supply and arranged on the rear cover 3, where when the rear cover 3 is in the latched state, the switch cuts off power supply; and when the rear cover 3 is in the unlatched state, the switch recovers power supply;
or, a signal transmitter arranged on the rear cover 3, a controller 9 operable to control a power state of a power supply, and a signal receiver mounted on the controller 9, where when the rear cover 3 is in the latched state, the controller 9 receives a power-off signal to cut off power supply, and when the rear cover 3 is in the unlatched state, the controller 9 receives a power-on signal to recover power supply;
or, a reed switch arranged on the shield 7, a second magnet 52 arranged on the rear cover 3, and a controller 9 electrically connected to the reed switch and operable to control a power state of a power supply, where when the rear cover 3 is in the latched state, the second magnet 52 moves closer to the reed switch so that the controller 9 cuts off power supply, and when the rear cover 3 is in the unlatched state, the second magnet 52 moves away from the reed switch so that the controller 9 recovers power supply.

The switch may adopt a mechanical contact switch, e.g., a power switch, a limit switch, or a travel switch, etc., or a contactless switch, e.g., an inductive switch, a photoelectrical switch, an infrared switch, or a digital switch, etc.

The latching mechanism 5 comprises a second iron sheet 51 arranged on the shield 7 and a second magnet 52 arranged on the rear cover 3, the second iron sheet 51 and the second magnet 52 being fitted to secure the rear cover 3.

A first elastic member 4 is arranged between the rear cover 3 and the housing 1, the first elastic member 4 acting on the rear cover 3 so that the rear cover 3 is given a tendency of moving toward the grass catcher 2. To switch the rear cover to the unlatched state, it is only needed to apply a force to separate the second iron sheet 51 and the second magnet 52, whereby the elastic force of the first elastic member 4 drives the rear cover to switch between the latched state and the unlatched state.

During operation, by flipping the rear cover 3, the power-off device 6 acts in cooperation with the latching mechanism 5. For example, in a case that the power-off device adopts the Hall plate 61, when the rear cover 3 is flipped so that the first magnet 62 move closer to the Hall plate 61 slowly, the Hall plate 61 receives a low level; now, signal communication between the Hall plate 61 and the controller 9 is disconnected, and the lawnmower is automatically deenergized; by continuing flipping the rear cover 3, the rear cover 3 would be secured by the latching mechanism 5, which facilitates taking off and mounting the grass catcher 2. After the clippings are completely dumped and the grass catcher 2 is mounted back, the Hall plate 61 receives a high level while the rear cover 3 is being flipped to move away slowly from the Hall plate 61; now, signal communication between the Hall plate 61 and the controller 9 is connected, and the lawnmower is automatically energized to operate.

### Second Implementation

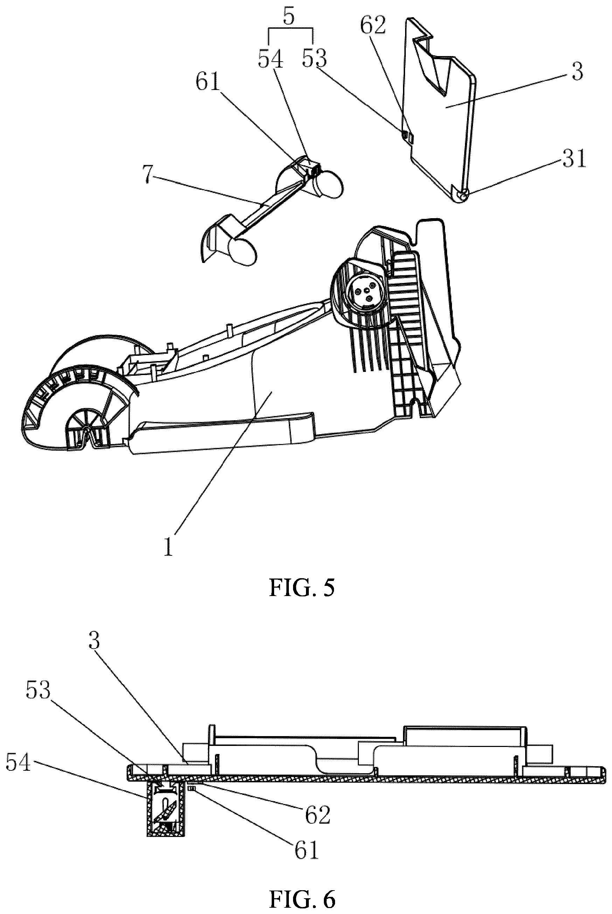

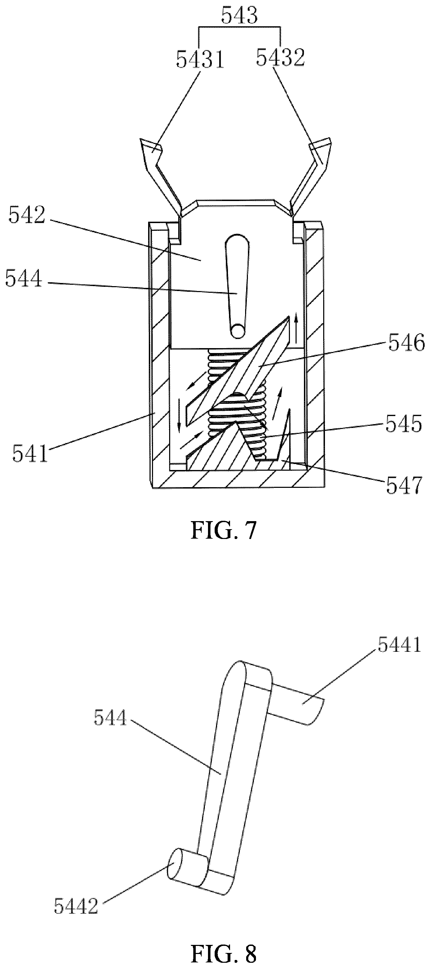

Different from the first implementation, as illustrated in Figs. 5 through 9, the latching mechanism 5 comprises a deadbolt 53 fixedly arranged on the rear cover 3, and a latch 54 movably arranged in the shield 7 and snap-fitted with the deadbolt 53; the latch 54 comprises a casing 541, a slider 542 movably arranged in the casing 541, a snap 543 and a rotary support 544 which are rotatably arranged on the slider 542, a first compression spring 545 connected between the casing 541 and the slider 542, and a first rail 546 and a second rail 547 which are fixedly arranged in the casing 541 and fitted with the rotary support 544 under an action of the first compression spring 545 to play a role of guiding.

Specifically, a slot 5421 is provided on an underside of the slider 542, a fixed shaft 5422 is transversely arranged in the slot 5421, and an arc-shaped recess 5423 is arranged at one side of the fixed shaft 5422, the first compression paring 545 being disposed on the fixed shaft 5422, one end of the rotary support 544 being rotatably arranged in the arc-shaped recess 5423, an opposite end of the rotary support 544 being movable along the first rail 546 and the second rail 547 under an action of the first compression spring 545.

In this implementation, the snap 543 comprises a first snap piece 5431 and a second snap piece 5432 which are symmetrically arranged, the first snap piece 5431 and the second snap piece 5432 forming a snap-fit position therebetween for securing the deadbolt 53, the first snap piece 5431 and the second snap piece 5432 being rotatable relatively to move closer to or away from each other so as to open or lock the snap-fit position.

Other contents not described in this implementation may refer to the first implementation.

### Third Implementation

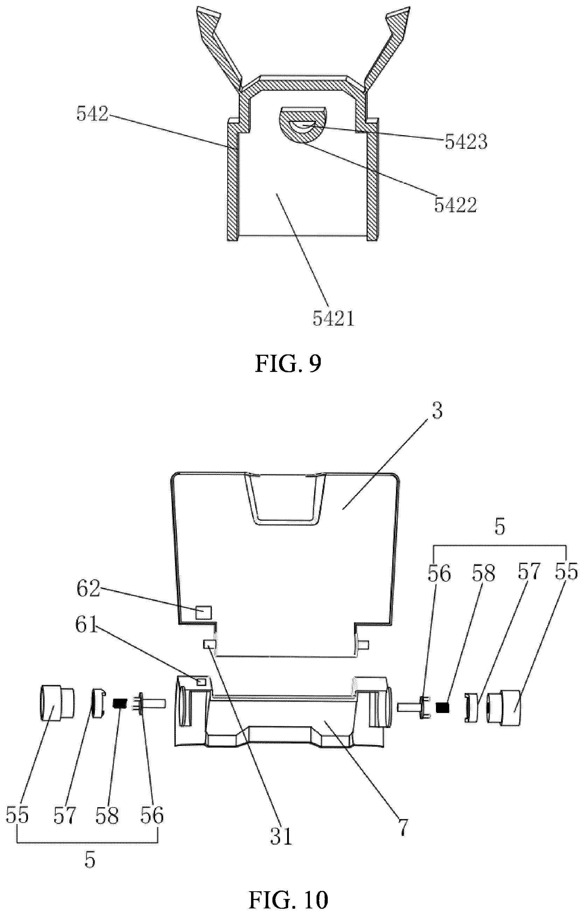

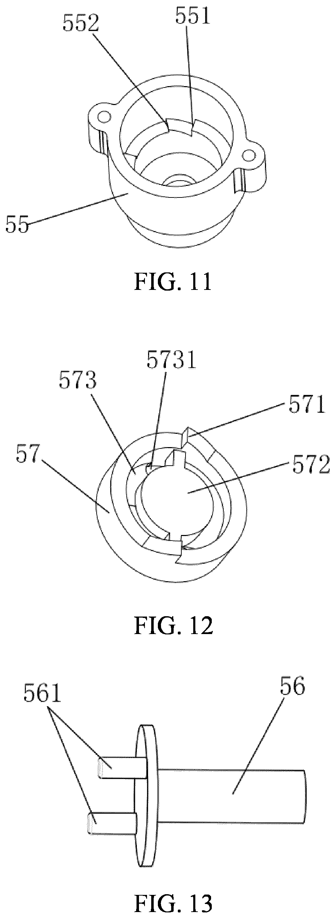

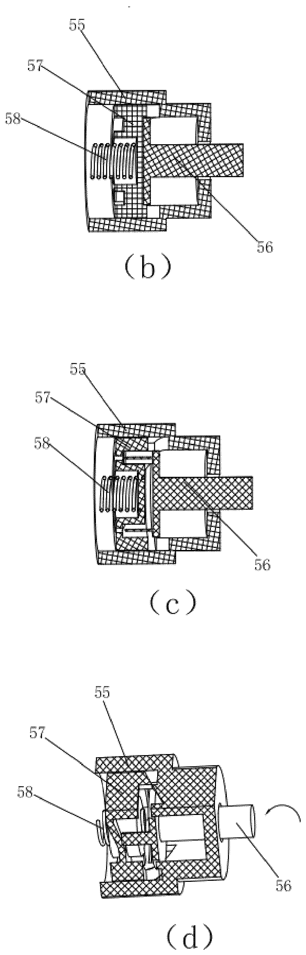

Different from the first implementation, as illustrated in Figs. 10 to 14, the latching mechanism 5 comprises a knob cover 55 fixedly arranged on the shield body, and a rotary rod 56, a knob 57, and a second compression spring 58 which are sequentially disposed in the knob cover 55, the second compression spring 58 being limited between the knob 57 and the shield body, one end of the rotary rod 56 being movably inserted in the knob cover 55, an opposite end of the rotary rod 56 being securely attached to the rear cover rotary shaft 31.

A knob step 571 is arranged in a peripheral direction of the knob 57, an abutment post 572 is arranged in the center of the knob 57, and a ramped rail 573 is arranged between the abutment post 572 and the knob step 571, a pressure relief hole 5731 is provided in the ramped rail 573, a first step 551 and a second step 552, which are fitted with the knob step 571, are arranged on the knob cover 55, and a support post 561, which is fitted with the ramped rail 573 and the pressure relief hole 5731, is arranged on the rotary rod 56.

Other contents not described in this implementation may refer to the first implementation.

### Fourth Implementation

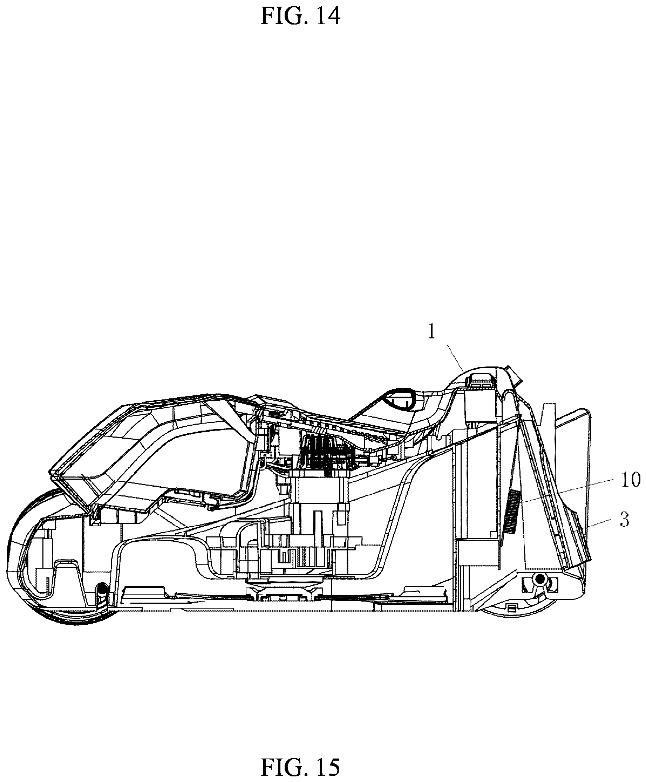

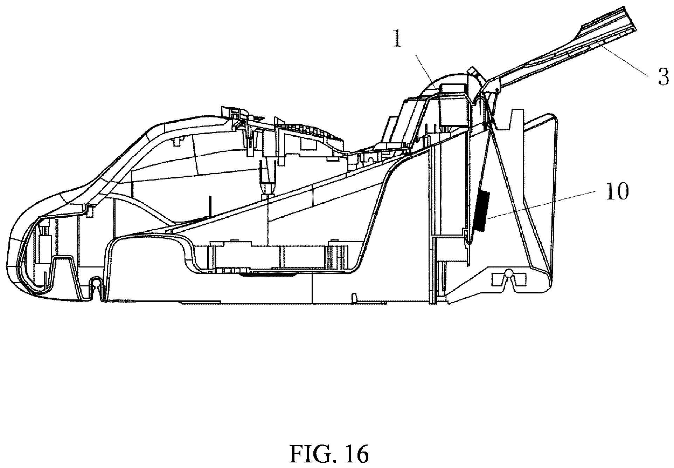

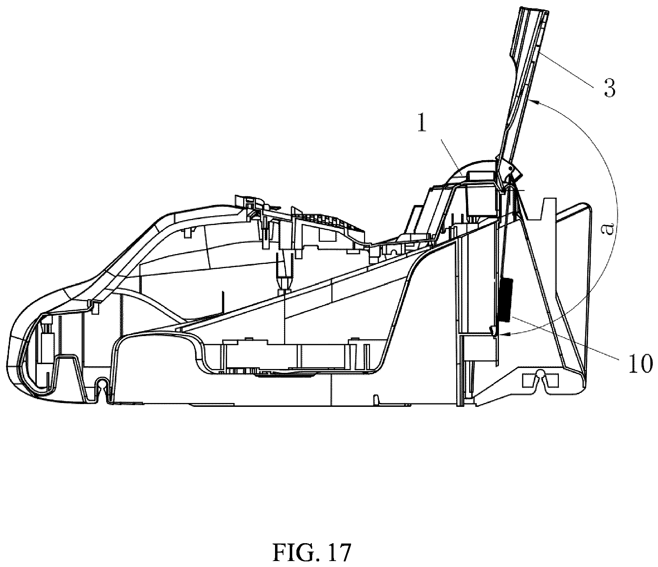

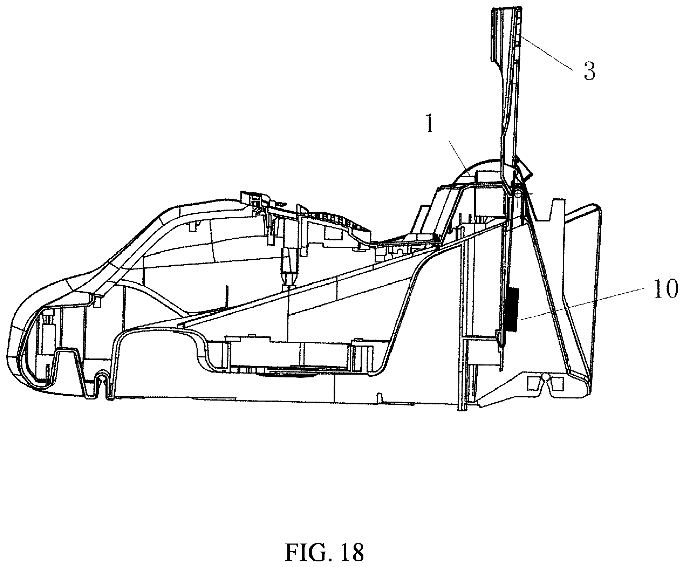

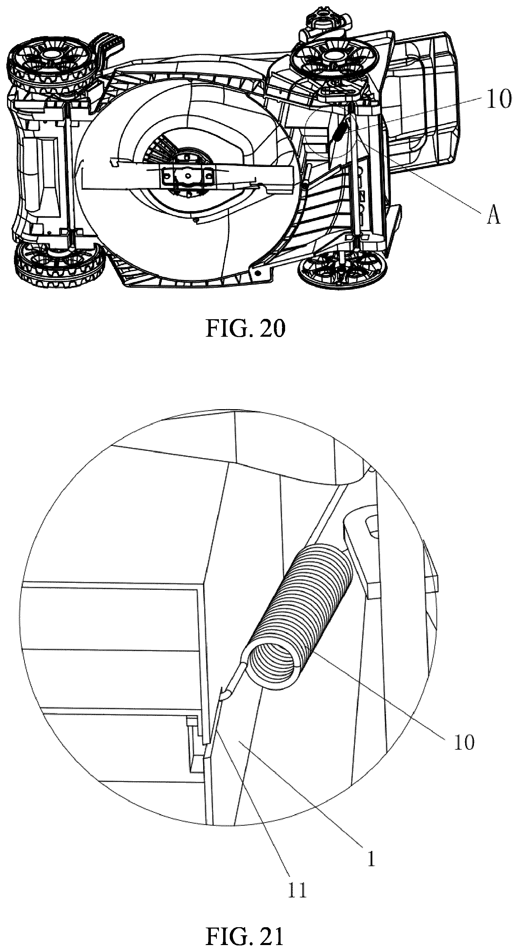

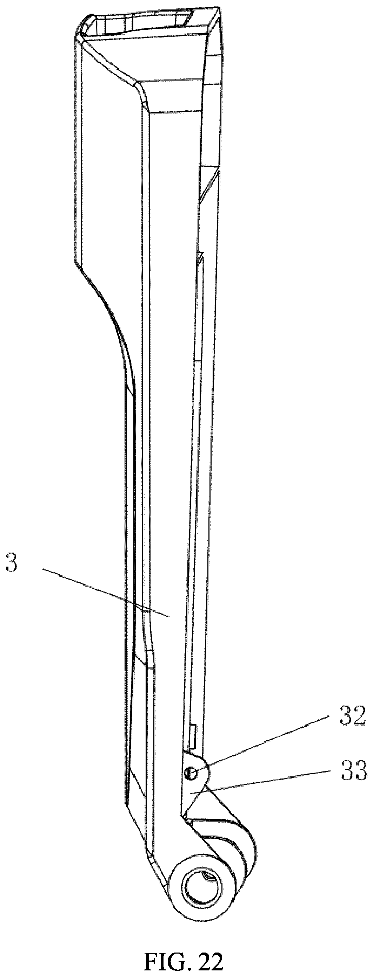

Figs. 15 to 22 illustrate a fourth implementation of a lawnmower according to the disclosure, which provides a latching mechanism structurally different from that described in the first implementation. In addition to the power-off device, the latching mechanism in this implementation further comprises a second elastic member 10 arranged between the housing 1 and the rear cover 3, and a docking port arranged on a tail portion of the housing 1, which is configured to dock the grass catcher. When the grass catcher is not mounted, the rear cover 3 is disposed at the closed position to close the docking port at the tail portion of the housing 1 so as to prevent foreign objects from entering the lawnmower. After the grass catcher is full, it is needed to flip the rear cover 3 to an open position to facilitate taking off the grass catcher to dump; when the rear cover 3 is at the open position, the rear cover 3 has an angle *a* of 175°~220° relative to the vertical surface; now, the rear cover 3 may maintain stationary relative to the housing 1. During a process of the rear cover 3 being flipped from the closed position to the open position, the second elastic member 10, which may adopt a tension spring, is continuously stretched to accumulate energy, i.e., during this process, the second elastic member 10 constantly accumulates elastic potential energy so as to impose a force of driving the rear cover 3 to reset to the closed position. The open position is set at a dead center position of the rear cover 3 rotating relative to the housing 1. The dead center position is where the extended line direction of the force imposed by the second elastic member 10 against the rear cover 3 passes through the rotational axis of the rear cover 3; now, the momentum arm of the elastic force imposed by the second elastic member 10 on the rear cover 3 is zero, i.e., the current elastic force imposed by the second elastic member 10 cannot drive the rear cover 3 to rotate relative to the housing 1, so that the rear cover 3 may maintain a stationary position relative to the housing 1. The rear cover 3 at the open position is preferably also disposed in a vertical posture; now, the direction of the gravitational force of the rear cover 3 also passes through the rotational axis of the rear cover 3, i.e., the momentum arm of the gravitational force imposed on the rear cover 3 is also zero, so that the rear cover 3 is disposed in the most stable position and may still maintain stationary if no external force is applied. This structural arrangement eliminates a need of employing a conventional latching structure to maintain the rear cover stationary relative to the housing, which cuts down the manufacturing cost of the overall lawnmower; in addition, due to elimination of the additional mechanical structure, the overall rear cover, when being rotated and flipped, gains an improved reliability.

Furthermore, the rear cover 3 is rotatably connected to the housing via the first rotary shaft 20; this rotational connection via the first rotary shaft 20 provides a high reliability, and the rear cover 3 is not easily stuck during the rotating process. Through holes are generally provided on both of the rear cover 3 and the housing; the first rotary shaft 20 passes through the through holes to implement rotational connection between the rear cover 3 and the housing. However, in a case that the rear cover 3 has a larger width and only one first rotary shaft 20 is adopted for the rotational connection, the first rotary shaft 20 is required to have a higher strength, resulting in a larger diameter of the first rotary shaft 20, so that the size of the through holes on the rear cover 3 and the housing 1 should also be larger, which would affect the overall design of the housing. Therefore, in the case of a larger width of the rear cover 3, two coaxially arranged first rotary shafts 20 may be provided, specific setup being described *infra*:
two stationary bases 40 distributed at an interval are arranged on the housing 1, the interval distance between the two stationary bases 40 being equal to the width of the rear cover 3, one first rotary shaft 20 extending in a direction toward the rear cover 3 being arranged on each stationary base 40, a through hole configured for the first rotary shaft 20 to pass through being provided on the rear cover 3, whereby the rear cover 3 and the housing are rotatably connected via the two coaxially arranged first rotary shafts 20.

Furthermore, to facilitate mounting the rear cover 3 on the housing 1 to realize rotational connection of the rear cover 3 relative to the housing 1, the stationary base 40 is provided with a base body 41 and a fixed chuck 42 detachably connected on the base body 41, the base body 41 being secured on the housing 1; a snap-in recess 43 may be provided on the base body 41, so that the fixed chuck 42 is snap-fitted with the snap-in recess 43. In this implementation, the snap-in recess 43 has a circular cross-section, so the cross-section of the fixed chuck 42 is also circular. One end of the first rotary shaft 20 is securely connected on an end surface of the fixed chuck 42, a through-hole for the first rotary shaft 20 to rotate through being provided on the base body 41, an opposite end of the first rotary shaft 20 passing through the through hole on the base body 41 so as to be inserted in the through hole on the rear cover 3. With this mounting manner, it is only needed to dispose the rear cover 3 between two base bodies 41, align the through hole on the rear cover 3 with the through hole on the base body 41, and then insert the fixed chuck 42 into the snap-in recess 43 while inserting the first rotary shaft 20 into the through hole on the rear cover 3 via the through hole on the base body 41, whereby rotational fitting connection between the rear cover 3 and the housing is realized, which can achieve automatic flowline assembly without using a tool.

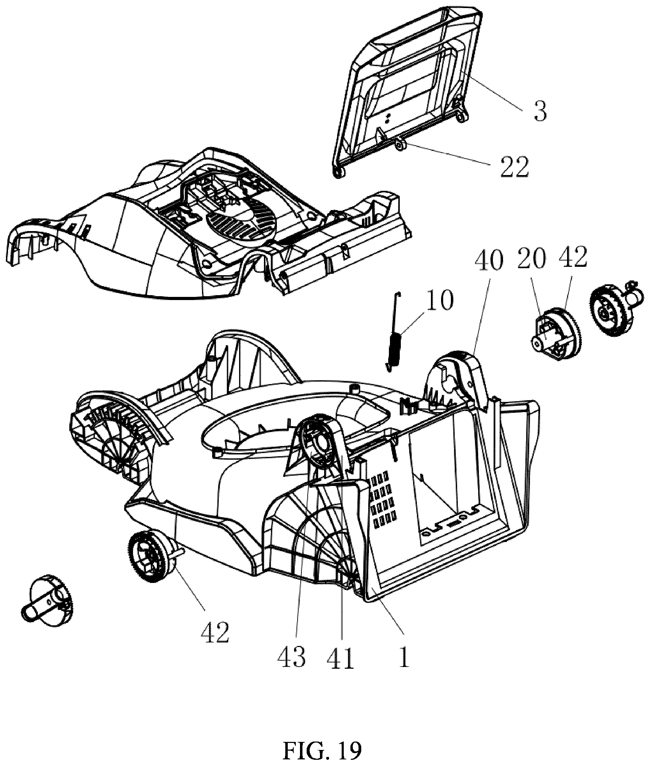

As illustrated in Figs. 19 through 22, to facilitate securing the second elastic member 10 to the rear cover 3 and the housing 1, a connecting portion 33 is provided on the rear cover 3, and an engagement hole 32 is provided on the connecting portion 33; the engagement hole 32 may be formed as a waist-shaped hole, which facilitates hitching an end portion of the second elastic member 10 in the engagement hole 32; the hitched end portion of the second elastic member 10 does not easily slip out of the engagement hole 32. After the rear cover 3 is flipped past the dead center position, the second elastic member 10 slides from one end of the engagement hole 32 to its opposite end; now, the elastic force of the second elastic member 10 would have a noticeably abrupt change, causing the rear cover 3 vibrated, which alerts the user that the rear cover 3 has been flipped past the dead center position. To facilitate mounting the second elastic member 10, one end of the second elastic member 10 may be bent into a hook shape and then hitched in the engagement hole 32, which facilitates assembly. The opposite end of the second elastic member 10 may also be bent into a hook shape, an engagement recess 11 being provided on the housing 1, so that the opposite end of the second elastic member 10 is hitched in the engagement recess 11. Of course, the engagement recess 11 is preferably disposed directly under the rotary shaft of the rear cover 3, so that when the rear cover 3 is at the open position, the rear cover 3 may maintain a vertical posture, so that the open position is less affected by the gravitational force of the rear cover 3.

When the grass catcher is not mounted, as illustrated in Fig. 15, the rear cover 3 closes the grass catcher docking port on the housing 1 under the elastic force of the second elastic member 10, disposing the rear cover 3 at the closed position. When the grass catcher is full and needs to be emptied, as illustrated in Figs. 2 to 4, the user may push the rear cover 3 to rotate to the dead center position with a single hand, so that the rear cover 3 reaches the open position; now, since the rear cover 3 is disposed at the dead center position, after the user releases his/her hand, the rear cover 3 can still maintain at the open position. Of course, on the safe side, the user may continue pushing the rear cover 3 from the dead center position; in this case, the second elastic member would vibrate the rear cover 3 noticeably to alert the user that the rear cover 3 has been pushed to the safe open position. After the user completes grass dumping, it is only needed to force the rear cover 3 to be flipped past the dead center position, whereby under the action of the elastic force of the second elastic member 10, the rear cover 3 rotates toward the closed position.

Other contents not described in this implementation may refer to the first implementation.

### Fifth Implementation

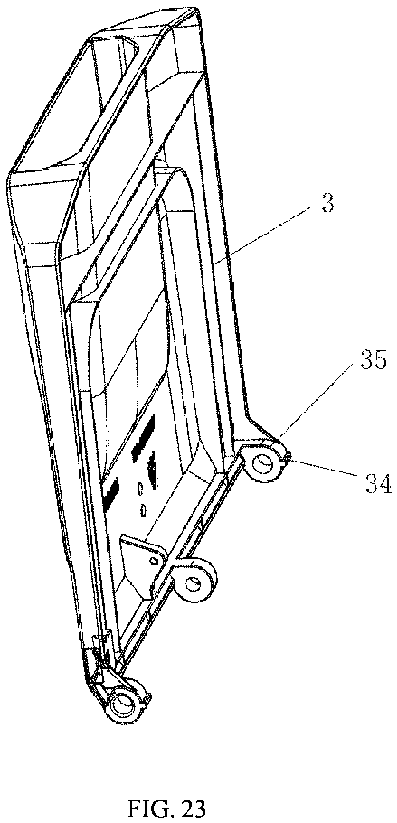

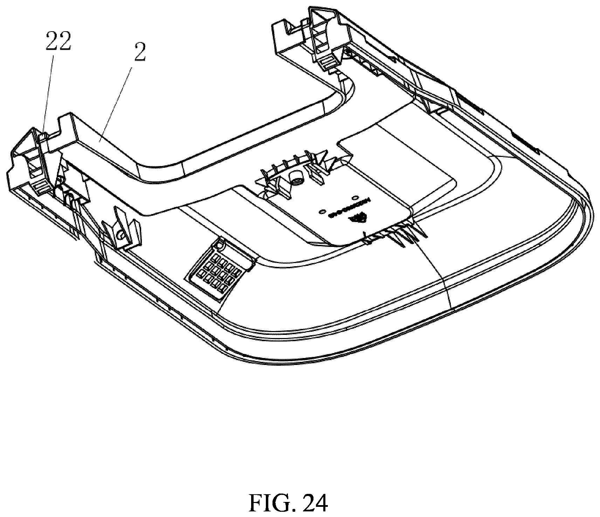

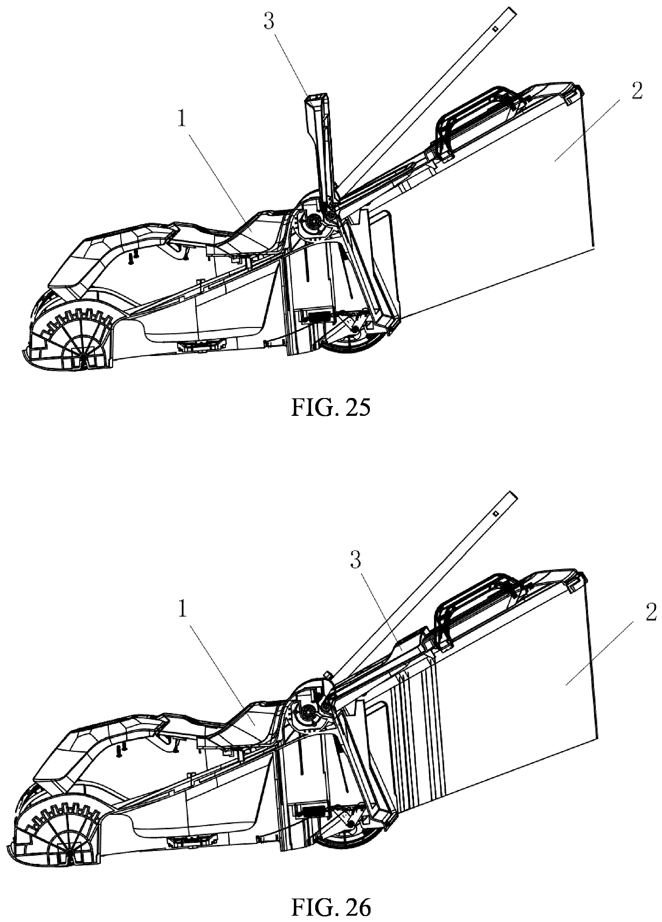

Figs. 23 to 26 illustrate a fifth implementation of a lawnmower according to the disclosure. On the basis of the preceding implementations, the lawnmower in this implementation further comprises a first drive portion 34 arranged on the rear cover 3 and a second drive portion 22 arranged on the grass catcher 2; when the grass catcher 2 is pushed in the housing 1, the second drive portion 22 engages the first drive portion 34 to drive the rear cover 3 to switch to the unlatched state, i.e., while the grass catcher 2 is being pushed into the housing 1, the rear cover 3 is flipped downward, which eliminates a need of manually closing the rear cover after the grass catcher 2 is pushed in the housing 1.

Furthermore, the rear cover 3 is rotatably connected to the housing 1 via the first rotary shaft 20, and a rotary shaft base 35 connected to the first rotary shaft 20 is provided on the rear cover 3, the first drive portion 34 being secured on the rotary shaft base 35. When the grass catcher 2 is pushed in the housing 1, the rotary base 35 is a part on the rear cover 3 closer to the grass catcher 2; by securing the first drive portion 34 on the rotary shaft base 35, its length projecting out of the first drive portion 34 and/or the second drive portion 22 may be reduced, mitigating interference with other parts.

Moreover, a pair of rotary shaft bases 35 may be provided on the rear cover 3, each rotary shaft base 35 being provided thereon with the first drive portion 34; with the pair of rotary shaft bases 35 being connected to two ends of the first rotary shaft 20, the rear cover 3 may rotate with a more stable rotating posture; in addition, by providing the first drive portion 34 on each rotary shaft base 35, the force driving the rear cover 3 to rotate when the grass catcher 2 is pushed in the housing 1 is scattered, which reduces the pressure against the single-sided first drive portion 34, thereby extending the service life.

The first drive portion 34 may be formed of a boss or a recess arranged on the rear cover 3, while the second drive portion 22 may be a corresponding raised structure provided on the grass catcher 2 to fit with the first drive portion 34, e.g., the second drive portion 22 is provided on the upper cover of the grass catcher 2 so as to drive the rear cover 3 to rotate while the grass catcher 2 is being pushed in the housing 1.

Other contents not described in this implementation may refer to the first or fourth implementation.

### Sixth Implementation

A lawnmower start/stop control method, which is applied to a lawnmower, comprises:
S1. determining whether a rear cover 3 is in a normal state according to a first preset condition;
S2. determining, based on the first preset condition, whether the lawnmower is startable according to a second preset condition;
S3. determining, based on the first preset condition and the second preset condition, whether a grass catcher 2 has been disturbed after start of the lawnmower, and controlling the lawnmower to start/stop according to a third preset condition;

where the first preset condition comprises whether flip angle *α* of the rear cover 3 satisfies 0° ~ 175°;
the second preset condition comprises whether a power switch is triggered; and
the third preset condition comprises whether flip angle Z of the rear cover 3 satisfies 175° ~ 220° in a case that the grass catcher 2 has been disturbed after start of the lawnmower.

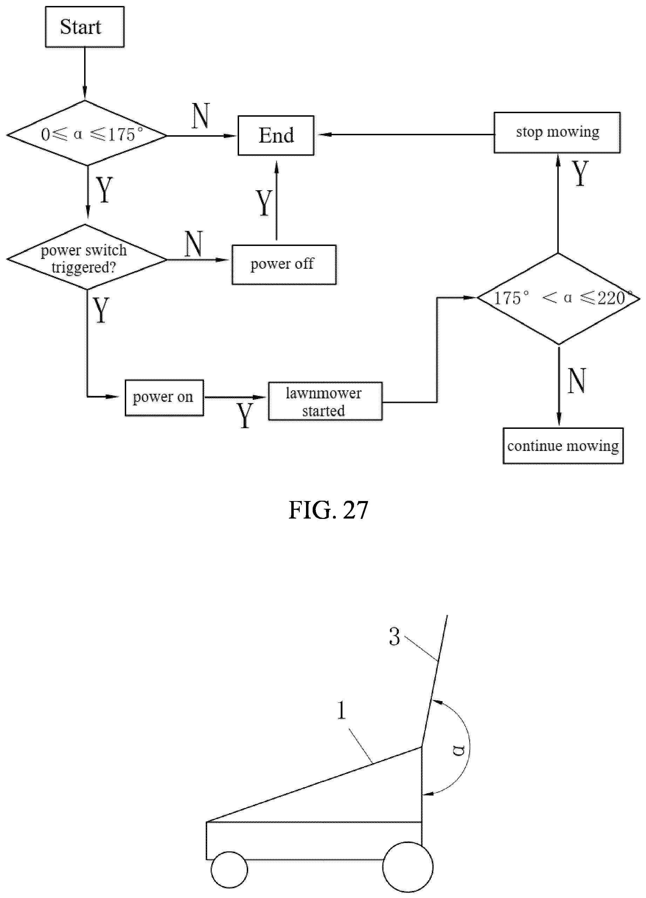

Referring to Figs. 27 to 29, when the lawnmower is in a clippings-shredding mode, the lawnmower start/stop control method comprises steps of:
S1. starting by pressing a button;
S2. determining flip angleαof the rear cover 3, where if the flip angle α of the rear cover 3 does not satisfy 0° ~ 175°, it indicates that the lawnmower is in an abnormal state, and the lawnmower stops; and if the flip angle α of the rear cover 3 satisfies 0° ~ 175°, it indicates that the lawnmower is in a normal state and the rear cover 3 is currently not latched;
S3. determining whether the power switch is triggered; where if the power switch is not triggered, the power supply does not supply power, and the lawnmower stops; and if the power switch is triggered, the power supply supplies power and the lawnmower is started;
S4. determining whether the grass catcher 2 has been disturbed after start of the lawnmower; where if the grass catcher 2 has been disturbed after start of the lawnmower and the flip angle α of the rear cover 3 is 175° ~ 220°, the lawnmower stops and the mowing operation ends;
where if the grass catcher 2 has been disturbed after start of the lawnmower and the flip angleαof the rear cover 3 does not satisfy 175° ~ 220°, the lawnmower continues operating.

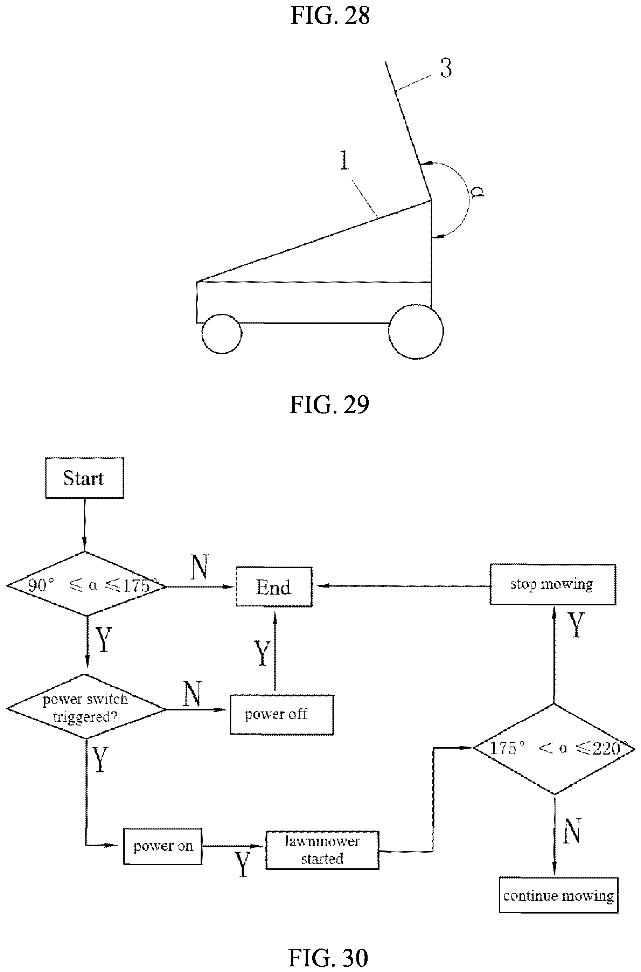

As illustrated in Fig. 30, when the lawnmower is in a clippings-collecting mode, the lawnmower start/stop control method comprises:
S1. starting by pressing a button;
S2. determining flip angleaof the rear cover 3, where if the flip angle α of the rear cover 3 does not satisfy 90° ~ 175°, it indicates that the lawnmower is in an abnormal state, and the lawnmower stops; and if the flip angleαof the rear cover 3 satisfies 90° ~ 175°, it indicates that the lawnmower is in a normal state and the rear cover 3 is currently not latched;
S3. determining whether the power switch is triggered; where if the flip angleaof the rear cover 3 satisfies 90° ~ 175° but the power switch is not triggered, the power supply does not supply power and the mowing operation ends;
   if the power switch is triggered, the power supply supplies power, and the lawnmower is started; and whether the grass catcher 2 is disturbed after the activation is determined;
S4. determining whether the grass catcher 2 is disturbed after start of the lawnmower; if the grass catcher 2 is disturbed after start of the lawnmower and the flip angle α of the rear cover 3 is 175° ~ 220°, the lawnmower stops, and the mowing operation ends;
if the grass catcher 2 has been disturbed after start of the lawnmower and the flip angle α of the rear cover 3 does not satisfy 175° ~ 220°, the lawnmower continues operating.

What have been described *supra* are only example implementations of the disclosure; however, the technical features of the disclosure are not limited thereto. Any alterations or modifications made by those skilled in the art without departing from the spirits of the disclosure shall fall within the scope of protection of the disclosure.

## Claims

1. A lawnmower, comprising: a housing, a rear cover, and a grass catcher arranged at one end of the housing, wherein the rear cover is rotatably arranged on the housing, and a latching mechanism operable to dispose the rear cover in a latched state is further arranged between the housing and the rear cover; and wherein when the rear cover is in the latched state, the lawnmower is disposed in a stop state, and when the rear cover is in an unlatched state, the lawnmower is disposed safely startable.

2. The lawnmower according to claim 1, wherein when a flip angle of the rear cover is disposed in a range from 175° to 220°, the latching mechanism is triggered to dispose the rear cover in the latched state.

3. The lawnmower according to claim 1 or 2, wherein the latching mechanism comprises a power-off device; when the rear cover is in the latched state, the power-off device is activated or deactivated to dispose the lawnmower in the stop state; and when the rear cover is in the unlatched state, the power-off device is deactivated or activated to dispose the lawnmower safely startable.

4. The lawnmower according to claim 3, wherein the power-off device comprises at least one of:
a structure comprising a Hall plate arranged on the housing, a first magnet arranged on the rear cover, and a controller electrically connected to the Hall plate and operable to control a power state of a power supply; wherein when the rear cover is in the latched state, the first magnet moves closer to the Hall plate so that the controller cuts off power supply, and when the rear cover is in the unlatched state, the first magnet moves away from the Hall plate so that the controller recovers power supply;
or, a switch arranged on the rear cover and electrically connected to a power supply, the switch being operable to cut off power supply when the rear cover is in the latched state and recover power supply when the rear cover is in the unlatched state;
or, a structure comprising a signal transmitter arranged on the rear cover, a controller operable to control a power state of a power supply, and a signal receiver installed on the controller, wherein when the rear cover is in the latched state, the controller receives a power-off signal to cut off power supply, and when the rear cover is in the unlatched state, the controller receives a power-on signal to recover power supply;
or, a structure comprising a reed switch arranged on the housing, a second magnet arranged on the rear cover, and a controller electrically connected to the reed switch and operable to control a power state of a power supply, wherein when the rear cover is in the latched state, the second magnet moves closer to the reed switch so that the controller cuts off power supply, and wherein when the rear cover is disposed in the unlatched state, the second magnet moves away from the reed switch so that the controller recovers power supply.

5. The lawnmower according to claim 3, wherein the latching mechanism comprises an iron sheet arranged on the housing, and a second magnet arranged on the rear cover, the iron sheet and the second magnet being fitted to secure the rear cover.

6. The lawnmower according to claim 3, wherein the latching mechanism comprises a deadbolt fixedly arranged on the rear cover, and a latch movably arranged in the housing and snap-fitted with the deadbolt; and the latch comprises a casing, a slider movably arranged in the casing, a snap and a rotary support which are rotatably arranged on the slider, a first compression spring connected between the casing and the slider, and a first rail and a second rail which are fixedly arranged in the casing and fitted with the rotary support under an action of the first compression spring to play a role of guiding.

7. The lawnmower according to claim 6, wherein the snap comprises a first snap piece and a second snap piece which are symmetrically arranged, a snap-fit position for securing the deadbolt being formed between the first snap piece and the second snap piece, the first snap piece and the second snap piece being rotatable relatively to move away from or closer to each other so as to open or lock the snap-fit position.

8. The lawnmower according to claim 3, wherein the latching mechanism comprises a knob cover fixedly arranged on a shield body, and a rotary rod, a knob, and a second compression spring which are sequentially arranged in the knob cover, the second compression spring being limited between the knob and the shield body, one end of the rotary rod being movably inserted in the knob cover, an opposite end of the rotary rod being fixedly attached to a rear cover rotary shaft.

9. The lawnmower according to claim 8, wherein a knob step is arranged in a peripheral direction of the knob, an abutment post is arranged in a central portion of the knob, a ramped rail is arranged between the abutment post and the knob step, a pressure relief hole is provided in the ramped rail, a first step and a second step, which are fitted with the knob step, are arranged on the knob cover, and a support post fitted with the ramped rail and the pressure relief hole is arranged on the rotary rod.

10. The lawnmower according to any one of claims 4 to 9, wherein a first elastic member is arranged between the rear cover and the housing, the first elastic member acting on the rear cover so that the rear cover is given a tendency of moving toward the grass catcher.

11. The lawnmower according to claim 3, wherein the latching mechanism comprises a second elastic member arranged between the housing and the rear cover, the rear cover, when being flipped by an angle ranging from 175° to 220°relative to a vertical surface, being capable of maintaining stationary relative to the housing.

12. The lawnmower according to claim 11, wherein a position disposing the rear cover stationary relative to the housing is where the rear cover is flipped to or past a dead center position of the second elastic member, the dead center position being a position where a pull force direction imposed by the second elastic member on the rear cover passes through a rotational axis of the rear cover.

13. The lawnmower according to claim 12, wherein a connecting portion is provided on the rear cover, an engagement hole for hitching the second elastic member being provided on the connecting portion.

14. The lawnmower according to claim 13, wherein the engagement hole is a waist-shaped hole, and after the rear cover is flipped past the dead center position, the second elastic member moves from one end of the engagement hole to an opposite end thereof.

15. The lawnmower according to claim 11, wherein the rear cover is rotatably connected to the housing via a first rotary shaft.

16. The lawnmower according to claim 15, wherein two stationary bases are arranged on the housing at an interval, an end portion of the rear cover being disposed between the two stationary bases, the first rotary shaft rotatably connected to the rear cover being provided on each of the stationary bases, axes of the first rotary shafts coinciding.

17. The lawnmower according to claim 16, wherein each of the two stationary bases comprises a base body and a fixed chuck removably connected on the base body, one end of the first rotary shaft being securely attached on the fixed chuck, a through hole for an opposite end of the first rotary shaft to pass through being provided on the base body, the opposite end of the first rotary shaft being rotatably connected to the rear cover.

18. The lawnmower according to claim 11, wherein an engagement slot for securing the second elastic member is provided on the housing.

19. The lawnmower according to claim 1, further comprising a first drive portion arranged on the rear cover and a second drive portion arranged on the grass catcher; and when the grass catcher is pushed in the housing, the second drive portion and the first drive portion engage to drive the rear cover to switch to the unlatched state.

20. The lawnmower according to claim 19, wherein the rear cover is rotatably connected to the housing via the first rotary shaft, a rotary shaft base connected to the first rotary shaft being provided on the rear cover, the first drive portion being secured on the rotary shaft base.

21. The lawnmower according to claim 20, wherein a pair of the rotary shaft bases are provided on the rear cover, the first drive portion being provided on each of the rotary shaft bases.

22. The lawnmower according to any one of claims 19 to 21, wherein the first drive portion is formed of a boss or a recess arranged on the rear cover.

23. A lawnmower start/stop control method, which is applied to the lawnmower according to any one of claims 1 to 22, comprising:
S1. determining whether a rear cover is in a normal state according to a first preset condition;
S2. determining, based on the first preset condition, whether the lawnmower is startable according to a second preset condition;
S3. determining, based on the first preset condition and the second preset condition, whether the grass catcher has been disturbed after start of the lawnmower, and controlling start/stop of the lawnmower according to a third preset condition;
wherein the first preset condition includes whether a flip angle of the rear cover satisfies 0° to 175°;
the second preset condition includes whether a power switch is triggered;
and the third preset condition includes whether the flip angle of the rear cover satisfies 175° to 220° in a case that the grass catcher has been disturbed after start of the lawnmower.
